# DEMANDE DE BREVET EUROPEEN

(11) **EP 1 855 171 A1**
(43) Date de publication de la demande: **14.11.2007**
(21) Numéro de dépôt: 06447063.6
(22) Date de dépôt: 10.05.2006
(51) Int. Cl.: G05B 19/048, G05B 15/02, B60R 16/00, B60K 37/00, B60R 27/00

(54) **Système de gestion centralisée d'équipements auxiliaires à bord de véhicules utilitaires, d'intervention ou d'urgence**

(71) Demandeur: Ideatec S.A., 5380 Fernelmont (BE)
(72) Inventeur: Migeot, Philippe, 4560 Clavier (BE); Del Vecchio, Pierre, 4530 Villers-le-Bouillet (BE)
(74) Mandataire: pronovem

(57) **Abrégé**

La présente invention se rapporte à un système de gestion centralisée de fonctions électriques dans un véhicule, réalisées chacune par un appareil électrique (3) déporté à un endroit déterminé du véhicule, ledit système comprenant une console ou un module de contrôle centralisé (1), relié par un bus série multiplexe unique à au moins un module de puissance (2) alimentant, commandant et contrôlant de manière protégée ledit appareil électrique (3), caractérisé en ce que la console (1) est en outre reliée à un micro-ordinateur de poche (4), de type PDA, présentant au moins un écran graphique (5), configurable grâce à un éditeur graphique couleur faisant partie intégrante du logiciel de configuration et pouvant être chargé dans le PDA, de manière telle que le synoptique du véhicule montrant l'emplacement du ou des appareils électriques (3) ainsi que des boutons de commande et/ou des voyants puissent être affichés et configurés à volonté par l'utilisateur sur l'écran graphique (5), de manière totalement autonome.

## Description

### Objet de l'invention

La présente invention se rapporte à un système à commandes centralisées, principalement destiné au contrôle des équipements ajoutés ou auxiliaires sur véhicules d'intervention et utilitaires.

### Arrière-plan technologique et état de la technique

Lorsqu'un aménageur de véhicules d'intervention ou utilitaires doit installer des équipements aussi encombrants que rampe de signalisation ou à défilement, feux de travail, gyrophares, sirènes, radio, éclairages divers, chauffages d'appoint, ventilateurs, verrouillages, etc., sachant que tous ces équipements sont dotés de leur propre système de contrôle, il est confronté à différents problèmes. Parmi ceux-ci figure celui de pouvoir implanter l'ensemble des systèmes de contrôle de manière centralisée sur le tableau de bord ou de manière plus générale dans la cabine du véhicule.

Actuellement, la Demanderesse propose déjà notamment le placement d'une seule et unique console, appelée *CanRis*^{™}*,* installée dans le véhicule, quel que soit le nombre d'éléments de contrôle à installer. La console est installée de préférence sur le tableau de bord du véhicule tel qu'une ambulance, mais une ou deux consoles supplémentaires, en option, peuvent se trouver également dans la cabine de l'ambulance, Ce système procède d'une technologie multiplexée à connexion unique et totalement autonome. Ce concept permet d'être indépendant du faisceau électrique d'origine et respecte la flexibilité d'aménagement ultérieur d'équipements supplémentaires. Concrètement, la liaison est réalisée au moyen d'un petit câble de type téléphonique. Ainsi, il n'est plus nécessaire, lors de l'installation, de démonter ou de transformer notamment le tableau de bord pour y placer une série d'interrupteurs. Les fusibles et fils encombrants disparaissent grâce à des sorties statiques puissantes et protégées sur le ou les modules de puissance. Cela est d'autant plus intéressant que, dans les véhicules actuels, l'emplacement des airbags et de leurs zones de déploiement ainsi que d'autres équipements intégrés laissent peu de possibilité d'ajout d'éléments nouveaux.

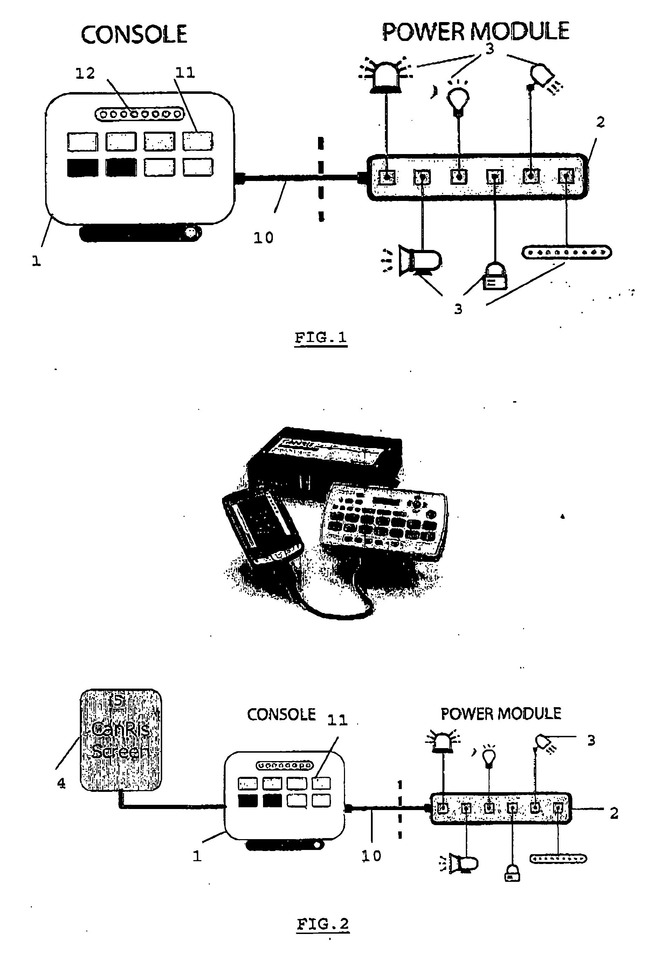

Un schéma de principe de cet appareil est illustré sur la figure 1. La console centrale de contrôle 1 est reliée par une liaison unique 10 qui transporte les informations en mode série à un ou plusieurs modules de puissance 2, dont les sorties statiques sont connectées aux différents équipements 3 ajoutés au véhicule (sirène, gyrophare, rampe d'éclairage, radio, chauffage d'appoint, ventilateur, etc.)

En outre, on met à disposition des aménageurs et constructeurs de véhicules un logiciel de configuration, appelé *ConsoleExpress*^{™}*,* qui permet de configurer à volonté le synoptique du véhicule et simuler globalement le système de contrôle. Par exemple, on peut souhaiter rajouter un ventilateur dans la cabine médicale ou un gyrophare à l'arrière du toit.

Un petit afficheur LCD intégré dans la console permet de visualiser en temps réel une multitude d'informations sur l'état, les défauts ou anomalies des différents éléments contrôlés, tels que par exemple la tension de batterie, certaines détections concernant des portes ouvertes ou fermées, des problèmes électriques sur les équipements, la gestion de l'énergie, etc. En outre, un journal de bord précis peut être affiché, imprimé et déchargé. Les fonctions sont configurables directement à partir de touches du clavier. Celles-ci sont personnalisables à l'aide d'une panoplie de pictogrammes fournie. Elles s'illuminent et informent du moindre dysfonctionnement des équipements contrôlés.

A l'heure actuelle, il existe -cependant un besoin dans le chef des constructeurs pour un afficheur de taille supérieure, en couleur et graphique. L'avantage de ce type d'écran graphique est bien sûr d'offrir la possibilité d'afficher sur un diagramme ou synoptique du véhicule tous les événements en temps réel.

L'intégration d'un tel afficheur dans la console rendrait cependant celle-ci plus encombrante et plus chère, sachant que, suivant les secteurs et utilisateurs, cet affichage n'est pas toujours utile.

Dans un premier temps, on a pensé à développer un petit écran optionnel extérieur qui serait compatible avec la console précitée. Cet écran permettrait donc la duplication de tous les messages arrivant sur l'écran LCD intégré sur la console et d'afficher le diagramme représentant le véhicule et ses équipements ajoutés. Le développement d'une telle solution peut cependant s'avérer long et coûteux.

Quelques fabricants de produits de gestion et de centralisation proposent déjà un affichage du synoptique du véhicule. Toutefois, aucune de ces solutions n'est souple et ouverte. Soit un afficheur graphique n'est pas disponible, soit l'afficheur est directement intégré dans la console centrale qui devient de ce fait trop encombrante et beaucoup plus chère.

Le document EP-B-0 491 095 décrit un système de contrôle à multiplexage de fonctions électriques dans un véhicule telles que lampes, lève-vitres, réglage de siège, fermeture de portières, etc. Ce système se compose d'un module de contrôle central associé à un transmetteur, disposé sur le tableau de bord et d'une série de modules à distance, chacun associé à un récepteur associé à une desdites fonctions électriques, répartis dans le véhicule. L'information de contrôle multiplexée est transmise par voie optique et sérielle, par exemple infrarouge, par diffusion, entre le transmetteur et les différents récepteurs.

Le document US-A-5,736,925 décrit un contrôleur de système avertisseur pour véhicule qui contrôle et synchronise tous les avertisseurs installés dans le véhicule. Le système de contrôle lumineux est modulaire. Le premier module est un module opérateur qui accepte les commandes de contrôle d'un opérateur et ,fournit un feedback visuel à celui-ci. Le second module est un module centralisé qui exécute les commandes et contrôle les avertisseurs et accessoires qui lui sont connectés. Ce système de contrôle lumineux pour véhicule peut être interfacé avec plusieurs types d'avertisseurs.

Le module opérateur comporte notamment un diagramme d'ambulance situé en hauteur présentant toute une série de LEDs correspondant aux différents gyrophares ou lampes placés sur le véhicule. Ces LEDs, bicolores, permettent un diagnostic en temps réel des problèmes en contrôlant chaque lampe du véhicule et en fournissant un feedback visuel.

### Buts de l'invention

La présente invention vise à fournir une solution qui permette de s'affranchir des inconvénients de l'état de la technique.

En particulier, l'invention a pour but de fournir un afficheur de synoptique de véhicule beaucoup plus grand et lisible que ceux de l'état de la technique, sans toutefois augmenter l'encombrement et le prix de revient de la console elle-même.

Un autre but de la présente invention est de permettre une configuration ou une reconfiguration autonome du système par l'utilisateur lui-même.

### Principaux éléments caractéristiques de l'invention

Un premier objet de la présente invention, selon la revendication 1, concerne un système de gestion centralisée de fonctions électriques dans un véhicule, réalisées chacune par un appareil électrique déporté à un endroit déterminé du véhicule, ledit système comprenant une console ou un module de contrôle centralisé, disposé de préférence sur le tableau de bord et relié par un bus série multiplexé unique à au moins un module de puissance alimentant, commandant et contrôlant de manière protégée ledit appareil électrique, ladite console comprenant une pluralité de boutons de commande et de voyants lumineux et éventuellement un afficheur graphique, ladite console étant configurable grâce à un logiciel ad hoc exécutable in situ ou sur un ordinateur extérieur relié à la console le temps de la configuration, caractérisé en ce que la console est en outre reliée à un micro-ordinateur de poche, de type PDA, présentant au moins un écran graphique, configurable grâce à un éditeur graphique couleur faisant partie intégrante dudit logiciel de configuration et pouvant être chargé dans le PDA, de manière telle que le synoptique du véhicule montrant l'emplacement du ou des appareils électriques ainsi que des boutons de commande et/ou des voyants puissent être affichés et configurés à volonté par l'utilisateur sur l'écran graphique, de manière totalement autonome.

Un second objet de la présente invention, selon les revendications 8, 12 et 13, concerne un procédé et logiciel de configuration et mise en oeuvre du système de gestion centralisée précité de fonctions électriques dans un véhicule, comprenant au moins les étapes suivantes :
- avant une première utilisation, on configure la console in situ ou via PC au moyen d'un logiciel de configuration, en fonction du véhicule à équiper ;
- on charge dans le PDA, de préférence via internet, un éditeur graphique faisant partie du logiciel de configuration précité ;
- on raccorde le PDA à la console ;
- à un moment ultérieur quelconque et dé façon autonome, on configure ou reconfigure l'affichage sur l'écran du PDA en accord avec la configuration implantée dans la console ;
- on vérifie sur l'écran du PDA et/ou sur l'afficheur graphique de la console l'état des appareils électriques contrôlés en temps réel, de même que leurs défaillances ou anomalies, en actionnant les boutons de commande et en interprétant l'information donnée par les voyants lumineux ;
- on enregistre, imprime ou décharge un fichier contenant l'historique des événements.

Les revendications 2 à 7 et 9 à 11 se rapportent à des formes d'exécution préférées de l'invention.

### Brève description des figuras

La figure 1, déjà mentionnée, représente un schéma de principe d'une console de contrôle centralisé et multiplexée avec son module de puissance selon l'état de la technique.

La figure 2 représente une photo et un schéma de principe d'une console de contrôle centralisé avec son module de puissance et son afficheur graphique séparé, utilisée dans le cadre de la présente invention.

### Description d'une forme d'exécution préférée de l'invention

L'idée à la base de la présente invention est d'utiliser, pour générer un écran graphique auxiliaire, un micro-ordinateur de poche, par exemple de type PDA *(Personal Digital Assistant),* muni d'un logiciel ad hoc, appelé *CanRisScreen*^{™}. Ensuite, il faut intégrer dans le logiciel de configuration précité, un éditeur graphique couleur permettant de créer, modifier sur mesure des synoptiques de véhicules liés à et donc correctement interactifs avec la configuration préétablie. Une fois la configuration terminée, on envoie celle-ci vers la console *CanRis*^{™}*.* A ce moment, il suffit de raccorder la liaison série existante RS232 de la console à un PDA équipé du logiciel *CanRisScreen*^{™} pour PDA. La configuration de l'écran graphique n'est donc pas figée ni imposée par le constructeur.

La figure 2 montre un schéma de principe d'une console de contrôle centralisé 1, à liaison unique multiplexée, avec son module de puissance 2 et son afficheur graphique séparé 4, utilisée dans le cadre de la présente invention.

L'éditeur graphique de *ConsoleExpreas*^{™} permet d'ajouter des schémas de véhicules, d'ajouter et configurer des équipements de puissance, etc. ; et ainsi de créer une bibliothèque de configurations.

Selon une forme préférée de l'invention, le logiciel *CanRisScreen*^{™}*,* par exemple disponible sur le site internet de la Demanderesse, permettra l'interaction et le dialogue du PDA avec la console *CanRis*^{™}*.* A l'inverse, les touches (boutons-poussoirs) de la console pourront également être utilisées pour commander le PDA.

Tout ou partie des fonctions disponibles sur la console sera avantageusement dupliquée au niveau du PDA.

Prenons un exemple. La console *Canris*^{™} permet de dédier une touche (bouton et voyant) à un gyrophare sur une ambulance par exemple. Non seulement l'utilisateur pourra allumer et éteindre le gyrophare comme avec l'interrupteur d'origine, mais, en outre, il sera informé en temps réel de l'état de l'ampoule, en particulier si celle-ci devient défectueuse. Il en sera de même de l'ensemble des éléments ajoutés et contrôlés par la même console centrale. Dans l'éditeur graphique, à partir d'un diagramme de la bibliothèque, on ajoute un gyrophare par « drag & drop » à l'endroit souhaité, par exemple sur le toit à droite, et on associe par exemple la touche A de la console à la sortie de puissance 1 du module P1. Dans cette configuration, si on pousse sur la touche A, celui-ci s'allume et la tension est appliquée au gyrophare. Après avoir sauvé la configuration, on lance l'éditeur graphique qui montre l'écran PDA simulé. Sur le listing que l'on peut imprimer, on lit: « Touche A - Sortie 1 de Pl - gyrophare - toit à droite ». On peut alors sauver la configuration et l'envoyer à la console *CanRis*^{™}*.* Lorsqu'on utilise la console, le gyrophare apparaît sur l'écran graphique du PDA à son emplacement sur le synoptique de l'ambulance, par exemple en bleu s'il fonctionne correctement. Si le gyrophare est en court-circuit, il s'affiche par exemple en orange clignotant.

Ainsi, les informations suivantes pourront être transmises à l'écran du PDA selon l'invention :
- état de tous les équipements auxiliaires et contrôlés par la console centrale ;
- affichage de prise en charge des signaux disponibles sur le véhicule, grâce à la présence de modules de détection d'entrées ;
- affichage de la gestion totale de l'énergie à bord du véhicule. C'est ainsi qu'il est possible de configurer le système pour conserver une charge suffisante afin d'assurer dans tous les cas le redémarrage du véhicule. La méthode la plus courante est le délestage-automatique éventuel d'éléments gros consommateurs en fonction de la tension de batterie mesurée en temps réel.

L'ajout d'un PDA selon l'invention permet également des fonctions complémentaires comme l'incorporation d'une boîte vocale numérique pour l'enregistrement d'événements, le guidage GPS lié bi-directionnellement en télécom par SMS à un logiciel de dispatching pour la gestion d'un parc d'ambulances, le placement et le contrôle d'une caméra de recul (« back-up camera ») à l'arrière du véhicule, etc.

Les avantages de l'invention sont les suivants :
- le constructeur ou l'aménageur conçoit lui-même le type de synoptique, à la demande du client ;
- le tableau de bord n'est pas nécessairement encombré par un afficheur spécialisé ;
- un grand nombre de solutions peuvent être offertes concernant le positionnement et la fixation de l'afficheur PDA ;
- les fabricants d'ordinateurs de poche de type PDA ou compatibles proposent chaque jour des nouvelles tailles et résolutions d'écran à des prix de plus en plus abordables ;
- l'afficheur n'est plus un équipement spécialisé spécialement développé pour l'application en question mais un équipement grand public et donc meilleur marché ;
- le fait d'intégrer un PDA à un système de gestion spécialisé ouvre la voie vers la télécommunication et le positionnement des véhicules d'intervention. Un logiciel « dispatching » destiné à la gestion des ambulances ou véhicules de pompiers est en cours de développement ;
- on peut envisager l'intégration d'une caméra de recul, option très appréciée.

## Revendications

1. Système de gestion centralisée de fonctions électriques dans un véhicule, réalisées chacune par un appareil électrique (3) déporté à un endroit déterminé du véhicule, ledit système comprenant une console ou un module de contrôle centralisé (1), disposé de préférence sur le tableau de bord ou dans la cabine du véhicule et relié par un bus série multiplexé unique à au moins un module de puissance (2) alimentant, commandant et contrôlant de manière protégée ledit appareil électrique (3), ladite console (1) comprenant une pluralité de boutons de commande et de voyants lumineux (11) et éventuellement un afficheur graphique (12), ladite console (1) étant configurable grâce à un logiciel ad hoc exécutable in situ ou sur un ordinateur extérieur relié à la console (1) le temps de la configuration, **caractérisé en ce que** la console (1) est en outre reliée à un micro-ordinateur de poche (4), de type PDA, présentant au moins un écran graphique (5), configurable grâce à un éditeur graphique couleur faisant partie intégrante dudit logiciel de configuration et pouvant être chargé dans le PDA, de manière telle que le synoptique du véhicule montrant l'emplacement du ou des appareils électriques (3) ainsi que des boutons de commande et/ou des voyants puissent être affichés et configurés à volonté par l'utilisateur sur l'écran graphique (5), de manière totalement autonome.

2. Système selon la revendication 1, **caractérisé en ce que** l'appareil électrique déporté (3) est une sirène, un gyrophare, une lampe, de préférence sous forme d'une rampe d'éclairage ou d'un éclairage clignotant, une radio, un chauffage d'appoint, un système de verrouillage ou un ventilateur.

3. Système selon la revendication 1 ou 2, **caractérisé en ce que** la liaison du PDA à la console (1) est une liaison série, de préférence RS232.

4. Système selon l'une quelconque des revendications précédentes, **caractérisé en ce que** le PDA est muni d'une boîte vocale numérique.

5. Système selon l'une quelconque des revendications précédentes, **caractérisé en ce que** le PDA est muni d'un système de guidage GPS pour une liaison télécom avec un centre de dispatching.

6. Système selon l'une quelconque des revendications précédentes, **caractérisé en ce qu'**il est associé à une caméra de recul positionnable, configurable et dont les images sont visualisables au moyen du PDA.

7. Système selon l'une quelconque des revendications précédentes, **caractérisé en ce que** les fonctions disponibles sur la console (1) sont au moins en partie dupliquées sur l'écran graphique (5) du PDA (4), de même que les messages affichés sur l'écran graphique éventuel de la console (1).

8. Procédé de configuration et mise en oeuvre du système de gestion centralisée de fonctions électriques dans un véhicule, selon l'une quelconque des revendications 1 à 7, **caractérisé en ce qu'**il comprend au moins les étapes suivantes :
- avant une première utilisation, on configure la console (1) in situ ou via PC au moyen d'un logiciel de configuration, en fonction du véhicule à équiper ;
- on charge dans le PDA (4), de préférence via internet, un éditeur graphique faisant partie du logiciel de configuration précité ;
- on raccorde le PDA (4) à la console (1);
- à un moment ultérieur quelconque et de façon autonome, on configure ou reconfigure l'affichage sur l'écran du PDA (4) en accord avec la configuration implantée dans la console (1);
- on vérifie sur l'écran (5) du PDA (4) et/ou sur l'afficheur graphique de la console l'état des appareils électriques contrôlés en temps réel, de même que leurs défaillances ou anomalies, en actionnant les boutons de commande et en interprétant l'information donnée par les voyants lumineux ;
- on enregistre, imprime ou décharge un fichier contenant l'historique des événements.

9. Procédé selon la revendication 8, **caractérisé en ce qu'**une boîte vocale numérique située dans le PDA est utilisée pour l'enregistrement d'événements.

10. Procédé selon la revendication 8, **caractérisé en ce qu'**une liaison de guidage GPS bidirectionnelle est assurée par des moyens télécom, de préférence par SMS, entre le PDA (4) et un système de dispatching à distance, pour la gestion d'un parc de véhicules tels que des ambulances.

11. Procédé selon la revendication 8, **caractérisé en ce qu'**on pilote, via le PDA (4), le positionnement d'une caméra de recul à l'arrière du véhicule et on visualise les images prises par celle-ci sur l'écran du PDA (4).

12. Programme d'ordinateur comprenant un code convenant pour la mise en oeuvre au moins partielle du procédé selon l'une quelconque des revendications 8 à 11, lorsque ledit programme est exécuté sur un ordinateur extérieur au système, sur 1a console et/ou sur le PDA.

13. Programme d'ordinateur selon la revendication 12, mémorisé sur un support lisible par un ordinateur.
